# EUROPEAN PATENT SPECIFICATION

(11) **EP 2 474 878 B1**
(45) Date of publication and mention of the grant of the patent: **20.03.2013**
(21) Application number: 11150218.3
(22) Date of filing: 05.01.2011
(51) Int. Cl.: G06F 1/16, H04B 1/38

(54) **Electronic device having an electronic compass adapted to detect when the device is in a holster**
Elektronische Vorrichtung mit elektronischem Kompass zur Erfassung, wann eine Vorrichtung sich in einem Halfter befindet
Dispositif électronique doté d'un compas électronique adapté pour détecter lorsque le dispositif se trouve dans un étui

(43) Date of publication of application: 11.07.2012
(73) Proprietor: Research In Motion Limited, Waterloo, ON N2L 3W8 (CA)
(72) Inventor: Pertuit, Michael Joseph, Irving, TX 75039 (US); Files, Jace William, Irving, TX 75039 (US); Holbein, Marc Edward, Waterloo Ontario N2L 3W8 (CA)
(74) Representative: Moore, Barry

(56) References cited:
- EP-A1- 2 194 694
- EP-A2- 1 780 505
- US-A1- 2009 132 198
- US-A1- 2010 081 473
- US-B1- 7 288 934

## Description

Embodiments herein relate generally to portable electronic devices, and in particular to portable electronic devices having an electronic compass adapted to detect when the device is received in a holster.

Electronic devices, including portable electronic devices, have gained widespread use and may provide a variety of functions including, for example, telephonic, electronic text messaging and other personal information manager (PIM) application functions. Portable electronic devices can include several types of devices including for example cellular phones, smart phones, Personal Digital Assistants (PDAs), tablets and laptop computers.

Devices such as PDAs or smart phones are generally intended for handheld use and ease of portability, and smaller devices may be generally desirable for portability and for use with a user's hands.

In some cases, portable electronic devices may be touch sensitive devices. For example, some devices may include a display (e.g. a liquid crystal display (LCD)) with a touch-sensitive overlay and may be particularly useful where limited space is available for user input and output devices.

In some cases, portable electronic devices may include a keypad having a plurality of keys and one or more other function buttons in addition to a display. Other devices may not have a keypad.
EP 2 194 694 A1 discloses a mobile device and holster system including a mobile device that has a front face and a back face opposite the front face, the back face including an elastomeric layer. A pair of longitudinal sides are coupled to the front face and back face, and a pair of latitudinal sides are also coupled to the front face and back face. The back face or the longitudinal sides define a recessed slot extending along a longitudinal length of the back face or longitudinal sides, respectively. The recessed slot defines an open end at least one of the latitudinal sides and the recessed slot has a recessed slot surface that comprises a low-friction material. The holster comprises a pocket defining an open top end configured to receive the mobile device. A rail extends longitudinally along an interior side of the pocket, and the rail is configured to correspond with and slidably engage the slot on the mobile device. The holster includes a magnet for magnetically interacting with the mobile device.
EP 1 780 505 A2 discloses that a magnetic field sensing device can be realized by using a magnetic sensor in electronic compassing as well as switching. A magnet can be brought in close proximity to the magnetic sensor within an electronic compass to generate a signal that a portable information device has been closed. This signal can be input to a processor or other circuitry to initiate a response to the portable information device being closed. When the magnet is moved out of close proximity to the magnetic sensor, the magnetic sensor can be used in the electronic compass. Thus, a magnetic sensor can serve two functions, namely compassing and switching, reducing the need for separate sensors to perform both functions.

### GENERAL

In one embodiment there may be provided a portable electronic device and a holster, where the portable electronic device is sized and shaped to be received within the holster in at least two orientations, the holster having a magnetic element, the portable electronic device comprising an electronic compass adapted to measure a magnetic field pattern in x, y and z-axes, the portable electronic device being adapted to determine that the portable electronic device is in the holster when the measured pattern matches at least one known pattern associated with the magnetic element, the electronic compass and the magnetic element cooperating so that the portable electronic device can determine the orientation of the portable electronic device within the holster, and the at least two orientations comprising a first orientation associated with a first known magnetic pattern and a second orientation associated with a second known magnetic pattern, wherein, in the first orientation, the electronic compass and the magnetic element are offset by distances X₁, Y₁ and Z₁ along the x, y and z-axes, respectively, wherein, in the second orientation, the electronic compass and the magnetic element are offset by distances X₂, Y₂ and Z₂ along the x, y and z-axes, respectively, and wherein at least two of the distances in the x, y and z-axes are different between the first and second orientations.
In another embodiment there may be provided a method of detecting a portable electronic device received in a holster comprising a magnetic element, the method comprising: providing an electronic compass on the portable electronic device; using the electronic compass; measuring a magnetic field pattern along x, y and z-axes; comparing the measured pattern to a first known pattern associated with a first orientation of the portable electronic device received in the holster in which the electronic compass and the magnetic element are offset by distances X₁ Y₁ and Z₁ along the x, y and z-axes, respectively, and if the measured pattern matches the first known pattern, determining that the portable electronic device is in the first orientation; and if the measured pattern does not match the first known pattern, comparing the measured pattern to a second known pattern associated with a second orientation of the portable electronic device received in the holster in which the electronic compass and the magnetic element are offset by distances X₂, Y₂ and Z₂ along the x, y and z-axes, respectively, and if the measured pattern matches the second pattern, determining that the portable electronic device is in the second orientation, wherein at least two of the distances in the x, y and z-axes are different between the first and second orientations.

### BRIEF DESCRIPTION OF THE DRAWINGS

Embodiments of the present disclosure will now be described, by way of example only, with reference to the attached figures, in which:

Figure 1 is a simplified block diagram of components of a portable electronic device according to one embodiment;

Figure 2 is a first perspective view of a portable electronic device according to one embodiment shown in a closed position;

Figure 3 is a second perspective view of the portable electronic device of Figure 2 shown in an open position;

Figure 4 is a schematic side view of a portable electronic device and a holster with the device out of the holster;

Figure 5 is a schematic side view of the portable electronic device and the holster of Figure 4 with the portable electronic device received in the holster in a first orientation;

Figure 6 is a schematic front view of the portable electronic device and the holster of Figure 5;

Figure 7 is a schematic side view of the portable electronic device and the holster of Figure 4 with the portable electronic device received in the holster in a second orientation;

Figure 8 is a schematic side view of the portable electronic device and the holster of Figure 4 with the portable electronic device received in the holster in a third orientation; and

Figure 9 is a flowchart of a method of detecting when a portable electronic device is in a holster.

### DETAILED DESCRIPTION

It will be appreciated that for simplicity and clarity of illustration, where appropriate, reference numerals may be repeated among the figures to indicate corresponding or analogous elements. In addition, numerous specific details are set forth in order to provide a thorough understanding of the example embodiments described herein. In some instances, well-known methods, procedures and components have not been described in detail so as not to obscure the example embodiments described herein.

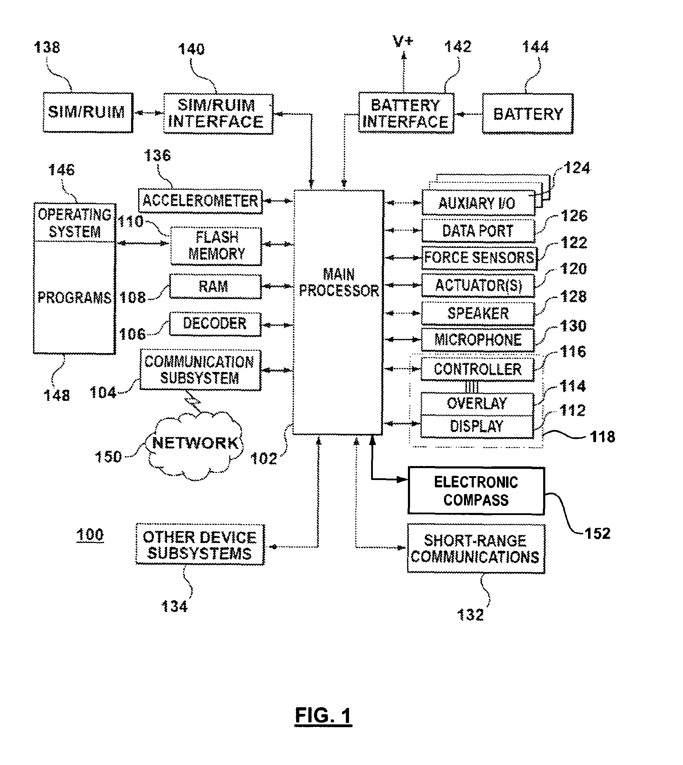

Figure 1 shows a simplified block diagram of components of a portable electronic device 100 according to one embodiment. As shown, the portable electronic device 100 includes multiple components, including for example a processor 102 that controls the operations of the portable electronic device 100. Communication functions, including data communications, voice communications, or both may be performed through a communication subsystem 104. In some embodiments, data received by the portable electronic device 100 may be decompressed and decrypted by a decoder 106.

The portable electronic device 100 may be a battery-powered device and as shown may include a battery interface 142 for receiving one or more batteries 144.

The communication subsystem 104 may receive messages from and send messages to a wireless network 150. The wireless network 150 may be any type of wireless network, including, but not limited to, data-centric wireless networks, voice-centric wireless networks, and dual-mode networks that support both voice and data communications. The processor 102 generally interacts with subsystem components such as a Random Access Memory (RAM) 108, a flash memory 110, and a display 112 (which may have a touch-sensitive overlay 114 connected to an electronic controller 116 that together comprise a touch-sensitive display 118, also be referred to as a touchscreen display). Information, such as text, characters, symbols, images, icons, and other items may be displayed on the touch-sensitive display 118.

In some embodiments, user-interaction with the graphical user interface may be performed through the touch-sensitive overlay 114. In particular, the processor 102 may interact with the touch-sensitive overlay 114 via the electronic controller 116.

Other components could include an actuator assembly 120, one or more optional force sensors 122, an auxiliary input/output (I/O) subsystem 124, a data port 126, one or more speakers 128, a microphone 130, a short-range communications module 132 and other device subsystems 134.

The processor 102 may also interact with an accelerometer 136 as shown in Figure 1. The accelerometer 136 may be used for detecting direction of gravitational forces or gravity-induced reaction forces.

In some embodiments, to identify a user as a subscriber for network access, the portable electronic device 100 may use a Subscriber Identity Module or a Removable User Identity Module (SIM/RUIM) card 138 inserted into a SIM/RUIM interface 140 for communication with a network, such as the wireless network 150. Alternatively, user identification information may be programmed into the flash memory 110, or via other techniques.

The portable electronic device 100 also generally includes an operating system 146 and software components 148 that are executed by the processor 102. The operating system 146 and software components 148 may be stored in a persistent store such as the flash memory 110 or another data storage device. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, or web page download may be processed by the communication subsystem 104 and input to the processor 102. The processor 102 may then process the received signal for output to the display 112 or alternatively to the auxiliary I/O subsystem 124. In some embodiments, a user may compose data items, such as e-mail messages, for example, which may be transmitted over the wireless network 150 through the communication subsystem 104.

For voice communications, the overall operation of the portable electronic device 100 may be similar. For example, the speaker 128 may output audible information converted from electrical signals, and the microphone 130 may convert audible information into electrical signals for processing.

As shown, the portable electronic device also includes an electronic compass 152. The electronic compass 152 may facilitate location and direction based services, such as navigation, by sensing the position of the portable electronic device 100 in relation to one or more magnetic fields, particularly the Earth's magnetic field.

In some embodiments, the electronic compass 152 may include a magnetometer. The magnetometer may include a multi-axis magneto-impedance sensor (e.g. a three-axis magneto-impedance sensor) or another suitable sensor.

For example, the electronic compass 152 may include three magneto-impedance (MI) sensors within a single integrated circuit package, each MI sensor operable to detect a magnetic field along a particular axis. The portable electronic device 100 can use signals from the MI sensors to determine direction or location information (or both) for the portable electronic device 100, which may be useful for navigating using the portable electronic device 100 for example.

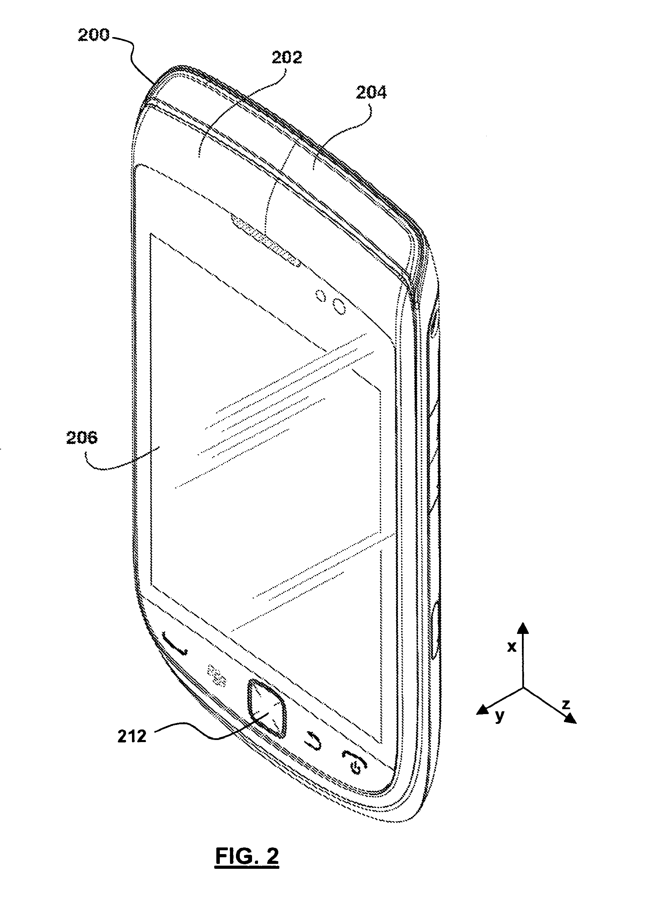

In particular, in a three-axis magneto-impedance sensor, magnetic fields may be measured along each of three orthogonal axes (e.g. x-axis, y-axis and z-axis as shown in Figure 2). Accordingly, the position and direction of the portable electronic device 100 with respect to the Earth's magnetic field can be determined to a generally desired degree of accuracy, depending on the characteristics of the electronic compass 152.

Some examples of suitable three-axis magneto impedance sensors for the electronic compass 152 include sensors from Aichi Micro Intelligent Corporation, such as the AMI304 and AMI306 sensors.

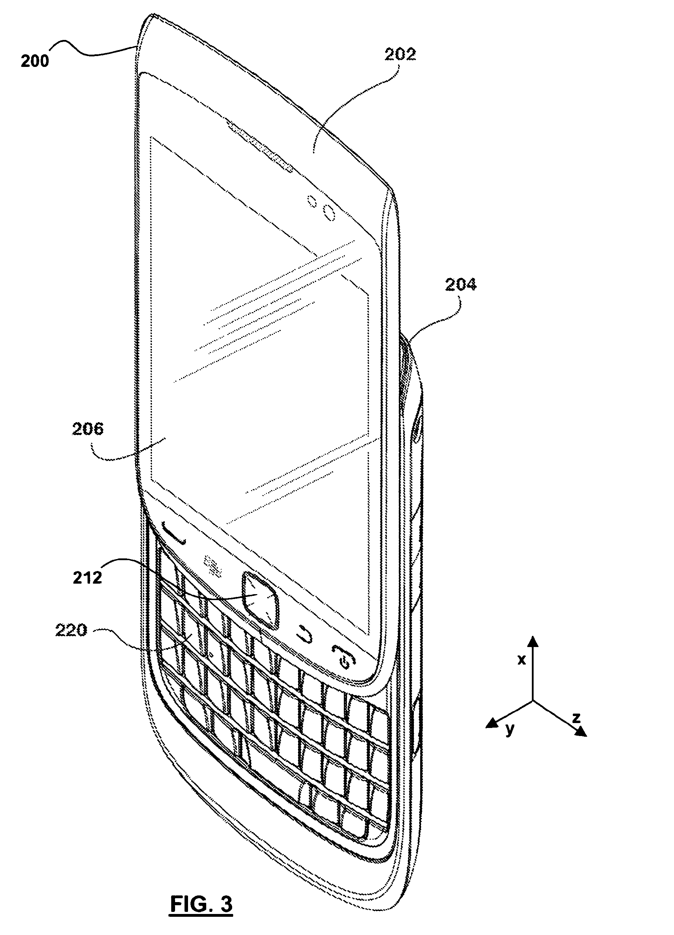

Turning now to Figures 2 and 3, illustrated generally therein is a portable electronic device 200. As shown, in this embodiment the portable electronic device 200 is a "slider" or "sliding" device that includes an upper housing 202 (sliding portion) and a lower housing 204 (base portion). The upper housing 202 and lower housing 204 are coupled together and are slidable between a closed position (as shown in Figure 2) and an open position (e.g. as shown in Figure 3) generally along a direction aligned with the x-axis.

The upper housing 202 in this embodiment includes a display 206, which could be an LCD, which may have touch screen capabilities (and which could be the touch screen display 118 identified in Figure 1).

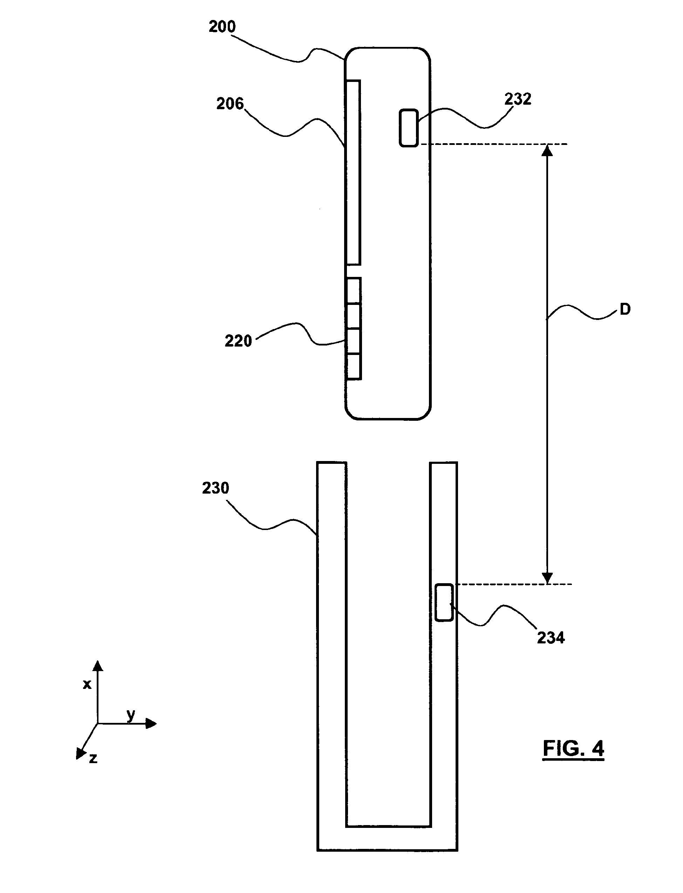

For clarity, the coordinate system shown in Figures 2 and 3 has been defined having the x-axis aligned with the direction of sliding of the upper and lower housings 202, 204, the y-axis normal to the plane of the display 206, and the z-axis perpendicular to the x-axis and y-axis. For consistency, the same relative coordinate system is also shown in Figures 4 to 7.

In some embodiments, one or both of the upper housing 202 and lower housing 204 may include one or more input apparatus, such as navigation keys or buttons, a physical or virtual keyboard, a trackpad, trackball, multimedia keys, and the like. For example, the upper housing 202 in this embodiment includes an auxiliary input device 212. The auxiliary input device 212 may be an optical navigation module (e.g. a trackpad or optical joystick) that responds to user interaction, and which may be used for navigating around the display screen 206, to select objects on the display screen 206, or for other purposes. In some other embodiments, the auxiliary input device 212 may be a mechanical device that responds to user interaction (e.g. a trackball).

The display 206 and the auxiliary input device 212 are generally disposed on a front of the upper housing 202 and may be exposed for user accessibility when the portable electronic device 200 is in both the open or closed position.

The upper housing 202 may also include other input devices, such as a dedicated phone application button, a "disconnect call" button, a home screen button, and the like. In various embodiments, these input devices may include optical sensors, mechanical buttons, or both.

Turning now specifically to Figure 3, in some embodiments the portable electronic device 200 may include a keypad 220 in addition to a display 206. In this embodiment, the keypad 220 is provided on the lower housing 204. The keypad 220 generally includes a plurality of alphanumeric keys, which may be positioned in a plurality of rows and columns. In some embodiments, the keys may represent an alphabet and may be arranged in a standard keyboard layout (e.g. QWERTY, QWERTZ, DVORAK, etc.).

In embodiments where the portable electronic device 200 is not a slider device (but is a "candybar" style device, for example), the keypad 220 may be positioned below the display 206.

Turning now to Figure 4, in some embodiments, the portable electronic device 200 is sized and shaped so as to receivable within a holster 230. The holster 230 may be useful for carrying or protecting the device 200. For example, the portable electronic device 200 may be placed in the holster 230 when the portable electronic device 200 is not in use, or when the portable electronic device 200 is being used with a headset or headphones. In some cases, the holster 230 may help prevent accidental key-presses of the keypad 220 or the display 206 (or both) when not desired. In some cases, the holster 230 could be worn on a belt, carried by a user (e.g. in a bag or purse or in their hand), could be adapted to be mounted in a car or another vehicle (e.g. so the portable electronic device 100 can be used as a navigation aid while driving), and so on.

As shown, the portable electronic device 200 includes an electronic compass 232, which could be the same as or similar to the electronic compass 152. In particular, the electronic compass 232 could include a three-axis magneto-impedance sensor or another magnetometer, and which could be adapted to measure magnetic fields along three axes. As described above, the electronic compass 232 may be used for navigational purposes, such as for determining location or direction information (or both) for the portable electronic device 200.

In the embodiments as described herein, the electronic compass 232 is also adapted to detect whether the portable electronic device 200 is located within the holster 230. In particular, the electronic compass is positioned to cooperate with a magnetic element 234 located in the holster 230 to determine whether the device 200 is in (or out) of the holster 230 according to measured magnetic field patterns.

In some embodiments, the magnetic element 234 could be a magnet or another object that has a magnetic field with a pattern that can be detected by the electronic compass 232.

In embodiments where the electronic compass 232 includes a three-axis magneto-impedance sensor, the three-axis magneto-impedance sensor may measure the magnetic field of the magnetic element 234 along at least one of the x-axis, y-axis and z-axis to obtain a measured magnetic field pattern. This measured magnetic field pattern may then be compared to a known pattern to determine whether the portable electronic device 200 is in the holster 230.

As used herein, the term "known pattern" may include "learned" patterns that are learned by the portable electronic device 200 during use, and which may in some embodiments be associated with one or more particular holsters 230. For example, the portable electronic device 200 and holster 230 may be "paired" together by having a user insert the portable electronic device 200 into the holster 230 and then perform some action (e.g. press a particular button). A "known pattern" may also include preset or predetermined patterns, for example one or more patterns provided to the portable electronic device 200 by the manufacturer of the portable electronic device 200, of the holster 230, or both. In some cases, "known patterns" may include patterns sent to the portable electronic device 200, for example using the communication subsystem 104.

Returning again to Figure 4, when the portable electronic device 200 is out of the holster 230, the distance D between the electronic compass 232 and the magnetic element 234 may be sufficiently large so that the electronic compass 232 generally does not detect a significant pattern associated with the magnetic element 234.

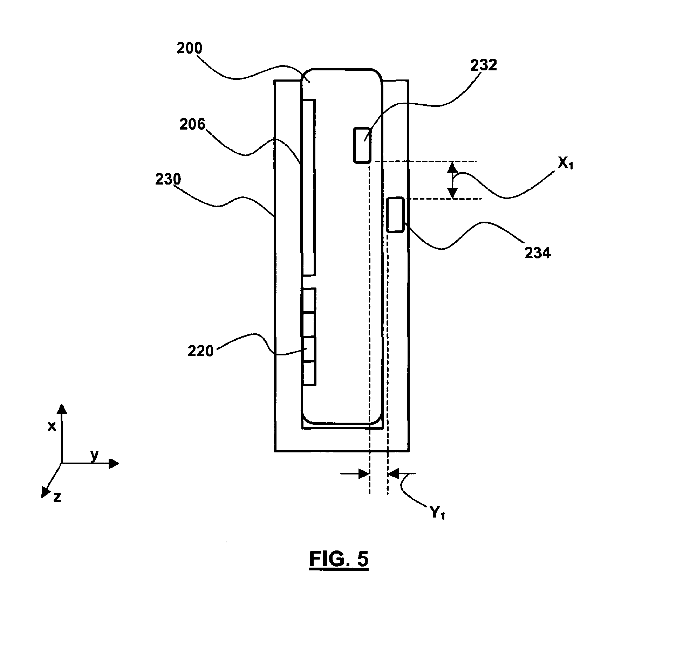

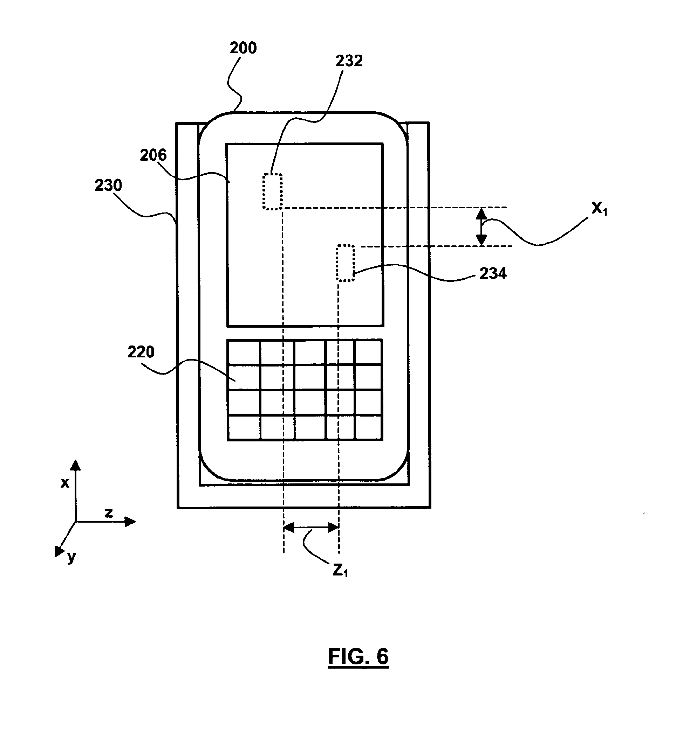

However, as shown in Figures 5 and 6, when the portable electronic device 200 is in the holster 230 (in this case in a first orientation), the electronic compass 232 can measure the magnetic field strength of the magnetic element 234 along the three axes: the x-axis (based on the distance X₁ along the x-axis), the y-axis (based on the distance Y₁ along the y-axis) and the z-axis (based on the distance Z₁ along the z-axis as shown in Figure 6). These measured field strengths when the portable electronic device 200 is in the holster 230 can be recorded as a "first pattern" and associated with the portable electronic device 200 being in the first orientation in the holster 230.

Accordingly, when the electronic compass 232 detects a measured pattern that corresponds to the first pattern, a determination can be made that the portable electronic device 200 is in holster 230. Furthermore, when the measured pattern corresponds to the first pattern, a determination can optionally be made that the portable electronic device 200 is also in a first orientation.

Advantageously, detecting a pattern across multiple axes (e.g. three axes) may be more robust that than detecting a pattern across a single axis for determining whether a device is in a holster. For example, some devices use a Hall effect sensor to detect a magnet in a holster. A Hall effect sensor is a simple transducer that varies its output voltage in response to changes in a magnetic field. However, a Hall effect sensor only detects a magnetic field along a single axis. Accordingly, to detect the magnet in the holster, the Hall effect sensor generally had to be in close proximity thereto (e.g. the Hall effect sensor and magnet normally had to be substantially aligned when the device was in the holster). This tended to limit placement options of the Hall effect sensor or magnet (or both) when designing a portable electronic device, and made sensing difficult.

In contrast, the use of an electronic compass 232 adapted to detect a pattern of magnetic fields along three different axes allows the electronic compass 232 and magnetic element 234 to be located at various locations (e.g. and not be aligned) while still generally providing robust detection of the holster 230. For example, the electronic compass 232 and magnetic element 234 can be offset by the X₁, Y₁, and Z₁ distances as shown while still providing good detection of the holster 230.

Furthermore, a Hall effect sensor is generally not well suited for detecting whether a device is in a holster in a different orientation. In particular, such detection may be difficult with a Hall effect sensor unless the magnet and Hall effect sensor can be closely aligned in both orientations, or multiple magnets are provided in the holster at different locations to align with the Hall effect sensor when the device is in the different orientations. This latter approach may be particularly undesirable as it may increase the part count and complexity of the holster as well as the cost.

By contrast, the embodiments herein may allow a single electronic compass 232 and a single magnetic element 234 to cooperate to detect whether the portable electronic device 200 is within the hostler 230 and optionally also determine the orientation of the portable electronic device 200 from various possible orientations.

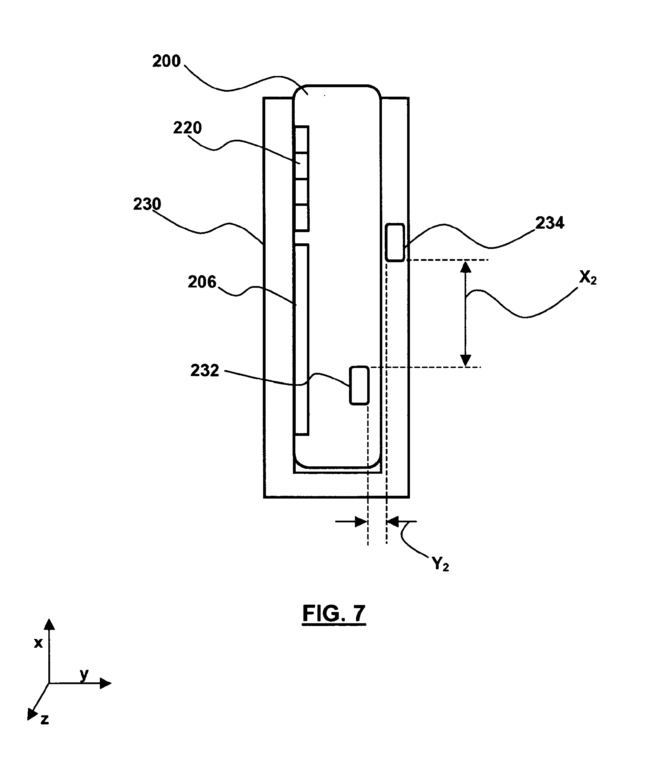

For example, as shown in Figure 7, the portable electronic device 200 has been inserted into the holster 230 in a second orientation (e.g. with the display 206 end inserted towards the bottom of the holster 230 and the keypad 220 end near the holster 230 opening). At least one of the x, y and z distances between the magnetic element 234 and electronic compass 232 may be different in this orientation (as compared to the first orientation shown in Figures 5 and 6). For example, as shown the X₂ distance is larger than the X₁ distance, although the Y₂ distance is the same as the Y₁ distance. Although not shown, the Z₁ and Z₂ distances may also be different between the first and second orientations.

Accordingly, in Figure 7 a "second pattern" of magnetic fields along the x, y and z-axes may be measured by the electronic compass 232 and associated with the portable electronic device 200 being in the holster 230 in this second orientation.

Thus, when the electronic compass 232 measures a magnetic field that corresponds to this second pattern, a determination can be made that the portable electronic device 200 is in the holster 200 in the second orientation.

This second pattern can be measured without a second additional magnetic element being required in the holster. Accordingly, embodiments herein may allow for detecting that the portable electronic device 200 is in the holster 230 in two or more orientations without additional components or sensors being required. This may be useful, for example, to allow for holster detection even if the user inadvertently places the portable electronic device 200 in the holster 230 in an unconventional direction (e.g. upside down), or when the first or second orientation is deliberately selected.

For example, depending on the shape of the holster 200, the first orientation may be selected to allow the display screen 206 to be exposed when the device 200 is in the holster 230 (e.g. this may be beneficial when the device 200 is being used in a car-mounted holster as a navigation aid), while the second orientation may be selected to fully cover the display 206 (e.g. so as to protect the display 206 or inhibit undesired touch screen presses).

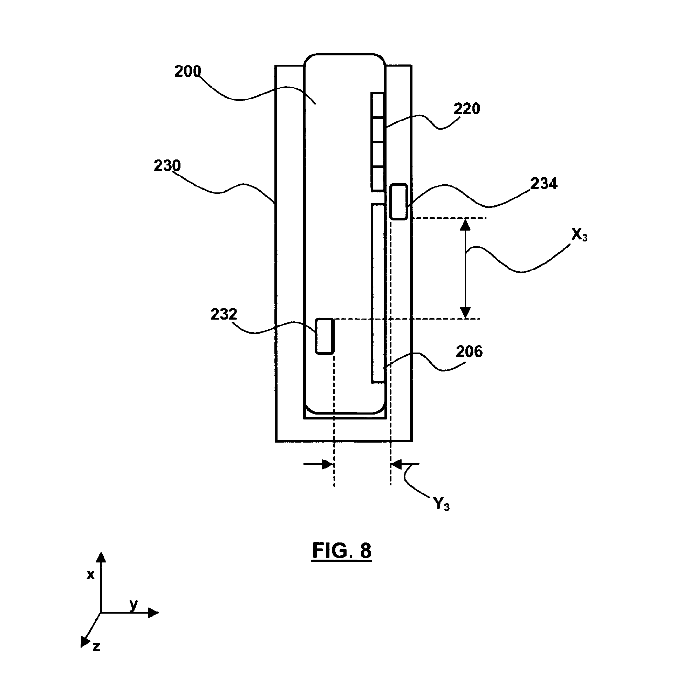

Another example of a third orientation is shown in Figure 8. In this embodiment, the device 200 has been rotated (from the second orientation) 180 degrees around the x-axis. In the third orientation, the Y₃ distance is larger than the Y₂ distance, although the X₃ distance is the same as the X₂ distance (and although not shown, the Z₃ and the Z₂ distances may also be different). The measured magnetic fields in this third orientation may be stored as a third pattern. When the electronic compass 232 detects a measured pattern that corresponds to this third pattern, a determination can be made that the portable electronic device 200 is in the holster 230 and in the third orientation.

Generally, as described herein the electronic compass 232 and sensor element 234 are adapted to determine whether the portable electronic device 200 is located within the holster 230, and in some embodiments what orientation the device 200 has within the holster 230. In some embodiments, these detections may be useful to allow for enabling or disabling of certain features or taking particular actions based on the whether the portable electronic device 200 is in the holster 230 and what is the particular orientation of the portable electronic device 200 within the holster 230. For example, various "modes" may be triggered depending on whether or not the device 200 is in the holster 230, and what the orientation of the device 200 in the holster 230 is.

Some of the modes may relate to power consumption of the device. For instance, power may be supplied to the all or most components for a "normal" power mode when the portable electronic device 200 is out of the holster 230 (as shown in Figure 4).

However, when the portable electronic device 200 is in the holster 230, power to one or more components (e.g. the keypad 220, the display 206, the processor 102, etc.) may be at least reduced or even completely interrupted in order to reduce the power consumption of the portable electronic device 200 (e.g. to enable a "low power mode"). This may be useful to extend the operating life of the battery based on a particular charge by deactivating those components that may not be needed when the portable electronic device 200 is in the holster 230 (e.g. the display 206 need not be active when the display 206 is fully covered by a holster 230).

In some embodiments, two or more different modes could be selected according to two or more orientations of the portable electronic device 200 within the holster 230. For example, when the portable electronic device 200 is in the first orientation (as shown in Figures 5 and 6), the device 200 may be in a first low power mode wherein substantially all of the components may be de-powered (e.g. including the display 206, the communication subsystem 104, the keypad 220, etc.). This may greatly increase the battery life for a particular charge, and may be useful as "long-lasting" low power mode. However, when in a second orientation (e.g. as shown in Figure 7) the device may be in a second low power mode where it is desirable that only some of the components are unpowered while other components are powered (e.g. the display 206 may be turned off but the communication subsystem 104 may be kept powered so that emails or voice communications can still be received).

Accordingly, using a three-axis magneto-impedance sensor or another suitable magnetometer to determine that the portable electronic device 200 is in the holster 230 in two or more orientations may allow for more flexible choices when initiating power management modes for the portable electronic device 200.

In some embodiments, the one or modes may refer to other settings that may be adjusted on the device based on whether the portable electronic device 200 is in the holster 230, such as notification or alert settings. For instance, the portable electronic device 200 may be in a "first mode" that uses a vibration alert for an incoming call when the portable electronic device 200 is in the holster 230 in a first orientation, a "second mode" with a ring alert for an incoming call when the portable electronic device 200 is in the holster 230 in a second orientation, and a "third mode" with both a ring and a vibrate for an incoming call when the portable electronic device 200 is out of the holster 230.

In some other embodiments, the electronic compass 152 may be a multi-axis magneto-impedance sensor having less than three axes. For example, the electronic compass 152 could be a two-axis magneto-impedance sensor.

In Figures 4 to 7, while the portable electronic device 200 is shown schematically as a candybar style device (with the keypad 220 located beneath the display 206), it will be appreciated that the portable electronic device 200 could be a slider device as shown in Figures 2 and 3, a clamshell device (also commonly known as a flip device), a swivel device and so on.

In some cases, using an electronic compass to detect the presence of the holster may eliminate the need for a separate Hall effect sensor to be provided in a portable electronic device. This may reduce the total part count for the portable electronic device, and which may reduce cost and complexity.

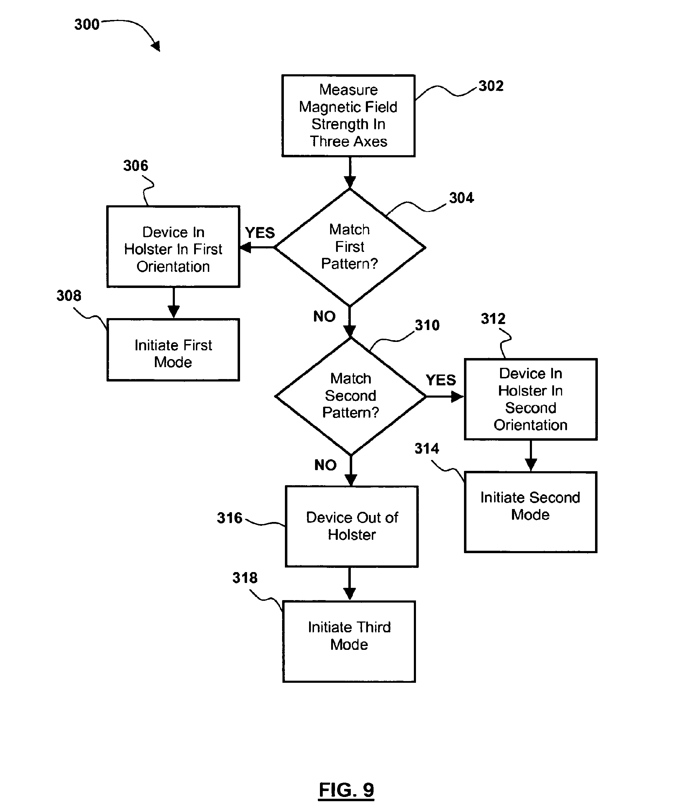

Turning now to Figure 9, illustrated therein is a flowchart showing a method 300 of determining whether a portable electronic device (e.g. the portable electronic device 200 or another portable electronic device) is within a holster (e.g. the holster 230 or another holster) and initiating one or more corresponding modes accordingly (which could be low power modes, alert settings modes, and so on).

At step 302, an electronic compass (e.g. the electronic compass 232 having a three-axis magneto-impedance sensor as described above) on the portable electronic device 200 is used to measure a magnetic field from a magnetic element (e.g. the magnetic element 234) provided on the holster 230. The magnetic field is measured in three axes to obtain a measured pattern.

At step 304, a determination is made as to whether the measured pattern corresponds to a first pattern associated with the portable electronic device 200 being provided in the holster 230 in the first orientation. If the patterns match, then the method 300 proceeds to step 306 where it is noted that the device 200 is in the holster 230 and in a first orientation. The method 300 may then proceed to step 308, where a first mode may be initiated (e.g. a first low power may be initiated by interrupting or at least reducing power to a number of components, including the display 206, the communication subsystem 104, and keypad 220), or another action may be taken (e.g. the alert settings may be changed for the portable electronic device 200 to activate a vibration alert).

Otherwise, if at step 304 the patterns do not match, the method 300 then proceeds to step 310.

At step 310, a determination is made as to whether the measured magnetic pattern corresponds to second pattern associated with the device 200 being in the holster 230 in a second orientation. If these patterns match, then the method 300 proceeds to step 312 where it is noted that the device 200 is in the holster 230 and in a second orientation. The method 300 may then proceed to step 314 where a second mode may be initiated (e.g. power may be cut to only some components, such as the display 206 only, while the communication subsystem 104 may remain actively powered so that emails can be received), or another action may be taken (e.g. the alert settings may be changed for the portable electronic device 200 to activate a ring alert).

Otherwise, if at step 310 the patterns do not match, the method 300 then proceeds to step 316.

In some embodiments, at step 316 a determination is made that the device 200 is out of the holster 230. The method may then proceed to step 318 where a third mode may be initiated. This could be a "normal" power mode in some embodiments with all or most components of the device 200 being powered, or another action may be taken (e.g. the alert settings may be changed for the portable electronic device 200 to activate both a ring and vibration alert).

In other embodiments, further comparisons may be made of the measured pattern and other known patterns that are associated with other orientations (e.g. the third pattern associated with the third orientation as shown in Figure 8). This may be repeated for each of various known patterns until all known patterns have been checked, and if no match is found, then a determination may be made that the portable electronic device 200 is out of the holster 230.

In some embodiments, regardless of the particular orientation of the portable electronic device 200 within the holster 230, the modes (e.g. the low power mode or alert mode) may be the same.

Generally, as the portable electronic device 200 moves into and out of the holster 230, the magnetic field between the electronic compass 232 and magnetic element 234 will vary. Thus, in some embodiments the method 300 may be repeated according to a particular polling schedule to continuously monitor whether the device 200 is in the holster 230 and take an appropriate desired action.

Some embodiments herein have referred to a slidable or "slider" portable electronic device that includes a housing, a touch-sensitive display exposed by a front of the housing, and functional components including memory and a processor coupled to the memory and the touch-sensitive display. The touch-sensitive display may also be referred to as a touchscreen display. However, the teachings herein are not limited to slidable or slider electronic devices or to touchscreen devices, but may apply to other types of portable electronic devices such as candybar or slab devices, clamshell or flip devices, swivel devices, and various combinations thereof. In particular, in some examples, the devices may include a keypad and touchscreen, and may include one or more auxiliary buttons, or may include a touchscreen without a keypad.

While the above description provides examples of one or more processes or apparatuses, it will be appreciated that other processes or apparatuses may be within the scope of the accompanying claims.

## Claims

1. A portable electronic device (200) and a holster (230), where the portable electronic device (200) is sized and shaped to be received within the holster (230) in at least two orientations,
the holster (230) having a magnetic element (234),
the portable electronic device (200) comprising an electronic compass (232) adapted to measure a magnetic field pattern in x, y and z-axes,
the portable electronic device (200) being adapted to determine that the portable electronic device (200) is in the holster (230) when the measured pattern matches at least one known pattern associated with the magnetic element (234),
the electronic compass (232) and the magnetic element (234) cooperating so that the portable electronic device (200) can determine the orientation of the portable electronic device (200) within the holster (230), and
the at least two orientations comprising a first orientation associated with a first known magnetic pattern and a second orientation associated with a second known magnetic pattern,
wherein, in the first orientation, the electronic compass (232) and the magnetic element (234) are offset by distances X₁ Y₁ and Z₁ along the x, y and z-axes, respectively,
wherein, in the second orientation, the electronic compass (232) and the magnetic element (234) are offset by distances X₂, Y₂ and Z₂ along the x, y and z-axes, respectively, and
wherein at least two of the distances in the x, y and z-axes are different between the first and second orientations.

2. The portable electronic device (200) and holster (230) of claim 1, wherein the electronic compass (232) comprises a magnetometer adapted to measure the magnetic pattern along the three axes.

3. The portable electronic device (200) and holster (230) of any preceding claim, wherein the portable electronic device (200) is adapted to initiate a first mode when the determination is made that the portable electronic device (200) is in the holster (230).

4. The portable electronic device (200) and holster (230) of claim 3, wherein the first mode is a low power mode.

5. The portable electronic device (200) and holster (230) of claim 3 or claim 4, wherein the first mode includes an associated alert setting.

6. The portable electronic device (200) and holster (230) of claim 1 or claim 2, wherein the portable electronic device (200) is adapted to trigger a first mode when the portable electronic device (200) is in the first orientation and a second mode when the portable electronic device (200) is in the second orientation.

7. The portable electronic device (200) and holster (230) of any preceding claim, wherein the X₂ distance is different than the X₁ distance, the Y₂ distance is the same as the Y₁ distance, and the Z₂ distance is different than the Z₁ distance.

8. The portable electronic device (200) and holster (230) of any preceding claim, wherein the at least two orientations comprise a third orientation associated with a third known magnetic pattern, and, in the third orientation, the electronic compass (232) and the magnetic element (234) are offset by distances X₃, Y₃ and Z₃ along the x, y and z-axes, respectively, and the X₃ distance is the same as the X₂ distance, the Y₃ distance is different than the Y₂ distance, and the Z₃ distance is different than the Z₂ distance.

9. A method (300) of detecting a portable electronic device (200) received in a holster (230) comprising a magnetic element (234), the method (300) comprising:
providing an electronic compass (232) on the portable electronic device (200);
using the electronic compass (232);
measuring a magnetic field pattern along x, y and z-axes (302);
comparing the measured pattern to a first known pattern (304) associated with a first orientation of the portable electronic device (200) received in the holster (230) in which the electronic compass (232) and the magnetic element (234) are offset by distances X₁, Y₁ and Z₁ along the x, y and z-axes, respectively,
and if the measured pattern matches the first known pattern, determining that the portable electronic device (200) is in the first orientation (306); and
if the measured pattern does not match the first known pattern, comparing the measured pattern to a second known pattern (310) associated with a second orientation of the portable electronic device (200) received in the holster (230) in which the electronic compass (232) and the magnetic element (234) are offset by distances X₂, Y₂ and Z₂ along the x, y and z-axes, respectively, and if the measured pattern matches the second pattern, determining that the portable electronic device (200) is in the second orientation (312),
wherein at least two of the distances in the x, y and z-axes are different between the first and second orientations.

10. The method (300) of claim 9, further comprising initiating a first mode (308) when the measured pattern matches the first known pattern (304).

11. The method (300) of claim 9 or claim 10, further comprising initiating a second mode (314) when the measured pattern matches the second pattern (310).

12. The method (300) of any one of claims 9 to 11, further comprising:
comparing the measured pattern with a plurality of known patterns for a plurality of orientations (304, 310);
if the measured pattern matches at least one of the plurality of known patterns,
initiate a corresponding low power mode (308, 314); and
if the measured pattern does not match at least one of the plurality of known patterns, determining that the device is out of the holster (316) and initiating a normal power mode (318).

## Patentansprüche

1. Tragbare elektronische Vorrichtung (200) und Holster bzw. Tasche (230), wobei die tragbare elektronische Vorrichtung (200) eine Größe hat und geformt ist, in dem Holster (230) in zumindest zwei Ausrichtungen aufgenommen zu werden,
wobei das Holster (230) ein magnetisches Element (234) hat,
die tragbare elektronische Vorrichtung (200) einen elektronischen Kompass (232) aufweist, der ausgebildet ist, ein Magnetfeldmuster in x-, y- und z-Achsen zu messen,
die tragbare elektronische Vorrichtung (200) ausgebildet ist, zu bestimmen, dass die tragbare elektronische Vorrichtung (200) in dem Holster (230) ist, wenn das gemessene Muster mit zumindest einem bekannten Muster übereinstimmt, das mit dem magnetischen Element (234) assoziiert ist, der elektronische Kompass (232) und das magnetische Element (234) zusammenarbeiten, so dass die tragbare elektronische Vorrichtung (200) die Ausrichtung dertragbaren elektronischen Vorrichtung (200) in dem Holster (230) bestimmen kann, und
die zumindest zwei Ausrichtungen eine erste Ausrichtung aufweisen, die mit einem ersten bekannten magnetischen Muster assoziiert ist, und eine zweite Ausrichtung, die mit einem zweiten bekannten magnetischen Muster assoziiert ist,
wobei in der ersten Ausrichtung der elektronische Kompass (232) und das magnetische Element (234) durch Abstände X₁, Y₁ und Z₁ entlang der x-, y-beziehungsweise z-Achsen versetzt sind,
wobei in der zweiten Ausrichtung der elektronische Kompass (232) und das magnetische Element (234) durch Abstände X₂, Y₂ und Z₂ entlang der x-, y-beziehungsweise z-Achsen versetzt sind, und
wobei zumindest zwei der Abstände in den x-, y- und z-Achsen zwischen den ersten und zweiten Ausrichtungen unterschiedlich sind.

2. Die tragbare elektronische Vorrichtung (200) und das Holster (230) gemäß Anspruch 1, wobei der elektronische Kompass (232) ein Magnetometer aufweist, das ausgebildet ist, das magnetische Muster entlang der drei Achsen zu messen.

3. Die tragbare elektronische Vorrichtung (200) und das Holster (230) gemäß einem vorhergehenden Anspruch, wobei die tragbare elektronische Vorrichtung (200) ausgebildet ist, einen ersten Modus zu initiieren, wenn bestimmt wird, dass die tragbare elektronische Vorrichtung (200) in dem Holster (230) ist.

4. Die tragbare elektronische Vorrichtung (200) und das Holster (230) gemäß Anspruch 3, wobei der erste Modus ein Niedrigenergiemodus ist.

5. Die tragbare elektronische Vorrichtung (200) und das Holster (230) gemäß Anspruch 3 oder Anspruch 4, wobei der erste Modus eine assoziierte Benachrichtigungseinstellung umfasst.

6. Die tragbare elektronische Vorrichtung (200) und das Holster (230) gemäß Anspruch 1 oder Anspruch 2, wobei die tragbare elektronische Vorrichtung (200) ausgebildet ist, einen ersten Modus auszulösen, wenn die tragbare elektronische Vorrichtung (200) in der ersten Ausrichtung ist, und einen zweiten Modus, wenn die tragbare elektronische Vorrichtung (200) in der zweiten Ausrichtung ist.

7. Die tragbare elektronische Vorrichtung (200) und das Holster (230) gemäß einem vorhergehenden Anspruch, wobei der Abstand X₂ verschieden ist von dem Abstand X₁ der Abstand Y₂ derselbe ist wie der Abstand Y₁, und der Abstand Z₂ verschieden ist von dem Abstand Z₁.

8. Die tragbare elektronische Vorrichtung (200) und das Holster (230) gemäß einem vorhergehenden Anspruch, wobei die zumindest zwei Ausrichtungen eine dritte Ausrichtung aufweisen, die mit einem dritten bekannten magnetischen Muster assoziiert ist, und in der dritten Ausrichtung der elektronische Kompass (232) und das magnetische Element (234) um Abstände X₃, Y₃ und Z₃ entlang der x-, y- beziehungsweise z-Achsen versetzt sind, und der Abstand X₃ derselbe ist wie der Abstand X₂, der Abstand Y₃ verschieden ist von dem Abstand Y₂, und der Abstand Z₃ verschieden ist von dem Abstand Z₂.

9. Ein Verfahren (300) zum Erfassen einertragbaren elektronischen Vorrichtung (200), die in einem Holster (230) aufgenommen ist, das ein magnetisches Element (234) aufweist, wobei das Verfahren (300) aufweist:
Vorsehen eines elektronischen Kompasses (232) auf der tragbaren elektronischen Vorrichtung (200);
Verwenden des elektronischen Kompasses (232);
Messen eines Magnetfeldmusters entlang x-, y- und z-Achsen (302);
Vergleichen des gemessenen Musters mit einem ersten bekannten Muster (304), das mit einer ersten Ausrichtung der tragbaren elektronischen Vorrichtung (200) assoziiert ist, die in dem Holster (230) aufgenommen ist, in dem der elektronische Kompass (232) und das magnetische Element (234) durch Abstände X₁, Y₁ und Z₁ entlang der x-, y- beziehungsweise z-Achsen versetzt sind, und wenn das gemessene Muster mit dem ersten bekannten Muster übereinstimmt, Bestimmen, dass die tragbare elektronische Vorrichtung (200) in der ersten Ausrichtung (306) ist; und
wenn das gemessene Muster nicht mit dem ersten bekannten Muster übereinstimmt, Vergleichen des gemessenen Musters mit einem zweiten bekannten Muster (310), das mit einer zweiten Ausrichtung der tragbaren elektronischen Vorrichtung (200) assoziiert ist, die in dem Holster (230) aufgenommen ist, in dem der elektronische Kompass (232) und das magnetische Element (234) durch Abstände X₂, Y₂ und Z₂ entlang der x-, y-beziehungsweise z-Achsen versetzt sind, und wenn das gemessene Muster mit dem zweiten Muster übereinstimmt, Bestimmen, dass die tragbare elektronische Vorrichtung (200) in der zweiten Ausrichtung (312) ist,
wobei zumindest zwei der Abstände in den x-, y- und z-Achsen zwischen den ersten und zweiten Ausrichtungen unterschiedlich sind.

10. Das Verfahren (300) gemäß Anspruch 9, das weiter aufweist ein Initiieren eines ersten Modus (308), wenn das gemessene Muster mit dem ersten bekannten Muster (304) übereinstimmt.

11. Das Verfahren (300) gemäß Anspruch 9 oder Anspruch 10, das weiter aufweist ein Initiieren eines zweiten Modus (314), wenn das gemessene Muster mit dem zweiten Muster (310) übereinstimmt.

12. Das Verfahren (300) gemäß einem der Ansprüche 9 bis 11, das weiter aufweist:
Vergleichen des gemessenen Musters mit einer Vielzahl von bekannten Mustern für eine Vielzahl von Ausrichtungen (304, 310);
wenn das gemessene Muster mit zumindest einem der Vielzahl von bekannten Mustern übereinstimmt, Initiieren eines entsprechenden Niedrigenergiemodus (308, 314); und
wenn das gemessene Muster nicht mit zumindest einem der Vielzahl von bekannten Mustern übereinstimmt, Bestimmen, dass die Vorrichtung außerhalb des Holster (316) ist, und Initiieren eines Normalenergiemodus (318).

## Revendications

1. Dispositif électronique portable (200) et étui (230), où le dispositif électronique portable (200) est dimensionné et mis en forme pour être reçu dans l'étui (230) dans au moins deux orientations,
l'étui (230) présentant un élément magnétique (234), le dispositif électronique portable (200) comprenant une boussole électronique (232) adaptée pour mesurer un profil de champ magnétique selon les axes x, y et z,
le dispositif électronique portable (200) étant adapté pour déterminer que le dispositif électronique portable (200) est dans l'étui (230) lorsque le profil mesuré correspond à au moins un profil connu associé à l'élément magnétique (234),
la boussole électronique (232) et l'élément magnétique (234) coopérant de sorte que le dispositif électronique portable (200) puisse déterminer l'orientation du dispositif électronique portable (200) dans l'étui (230),
et
l'au moins deux orientations comprenant une première orientation associée à un premier profil magnétique connu et une deuxième orientation associée à un deuxième profil magnétique connu,
où, dans la première orientation, la boussole électronique (232) et l'élément magnétique (234) sont décalés par des distances X₁, Y₁ et Z₁ le long des axes x, y et z, respectivement,
où, dans la deuxième orientation, la boussole électronique (232) et l'élément magnétique (234) sont décalés par des distances X₂, Y₂ et Z₂ le long des axes x, y et z, respectivement, et
où au moins deux distances parmi les distances dans les axes x, y et z sont différentes entre la première et la deuxième orientation.

2. Dispositif électronique portable (200) et étui (230) de la revendication 1, où la boussole électronique (232) comprend un magnétomètre adapté pour mesurer le profil magnétique le long des trois axes.

3. Dispositif électronique portable (200) et étui (230) de l'une des revendications précédentes, où le dispositif électronique portable (200) est adapté pour initier un premier mode lorsqu'on détermine que le dispositif électronique portable (200) est dans l'étui (230).

4. Dispositif électronique portable (200) et étui (230) de la revendication 3, où le premier mode est un mode de faible puissance.

5. Dispositif électronique portable (200) et étui (230) de la revendication 3 ou 4, où le premier mode comporte un réglage d'alerte associé.

6. Dispositif électronique portable (200) et étui (230) de la revendication 1 ou 2, où le dispositif électronique portable (200) est adapté pour déclencher un premier mode lorsque le dispositif électronique portable (200) est dans la première orientation et un deuxième mode lorsque le dispositif électronique portable (200) est dans la deuxième orientation.

7. Dispositif électronique portable (200) et étui (230) de l'une quelconque des revendications précédentes, où la distance X₂ est différente de la distance X₁, la distance Y₂ est la même que la distance Y₁, et la distance Z₂ est différente de la distance Z₁.

8. Dispositif électronique portable (200) et étui (230) de l'une des revendications précédentes, où les au moins deux orientations comprennent une troisième orientation associée à un troisième profil magnétique connu, et, dans la troisième orientation, la boussole électronique (232) et l'élément magnétique (234) sont décalés par des distances X₃, Y₃ et 2₃ le long des axes x, y et z, respectivement, et la distance X₃ est la même que la distance X₂, la distance Y₃ est différente de la distance Y₂, et la distance Z₃ est différente de la distance Z₂.

9. Procédé (300) de détection d'un dispositif électronique portable (200) reçu dans un étui (230) comprenant un élément magnétique (234), le procédé (300) comprenant le fait:
de fournir une boussole électronique (232) sur le dispositif électronique portable (200) ;
d'utiliser la boussole électronique (232) ;
de mesurer un profil de champ magnétique le long des axes (302) x, y et z ;
de comparer le profil mesuré à un premier profil connu (304) associé à une première orientation du dispositif électronique portable (200) reçu dans l'étui (230) où la boussole électronique (232) et l'élément magnétique (234) sont décalés par des distances X₁, Y₁ et Z₁ le long des axes x, y et z, respectivement, et de déterminer, si le profil mesuré correspond au premier profil connu, que le dispositif électronique portable (200) est dans la première orientation (306) ; et
de comparer, si le profil mesuré ne correspond pas au premier profil connu, le profil mesuré à un deuxième profil connu (310) associé à une deuxième orientation du dispositif électronique portable (200) reçu dans l'étui (230), où la boussole électronique (232) et l'élément magnétique (234) sont décalés par des distances X₂, Y₂ et 2₂ le long des axes x, y et z, respectivement, et de déterminer, si le profil mesuré correspond au deuxième profil, que le dispositif électronique portable (200) est dans la deuxième orientation (312),
où au moins deux distances parmi les distances dans les axes x, y et z sont différentes entre la première et la deuxième orientation.

10. Procédé (300) de la revendication 9, comprenant en outre le fait d'initier un premier mode (308) lorsque le profil mesuré correspond au premier profil connu (304).

11. Procédé (300) de la revendication 9 ou 10, comprenant en outre le fait d'initier un deuxième mode (314) lorsque le profil mesuré correspond au deuxième profil (310).

12. Procédé (300) de l'une quelconque des revendications 9 à 11, comprenant en outre le fait :
de comparer le profil mesuré avec une pluralité de profils connus pour une pluralité d'orientations (304, 310) ;
d'initier, si le profil mesuré correspond à au moins l'un de la pluralité de profils connus, un mode de faible puissance correspondant (308, 314) ; et
de déterminer, si le profil mesuré ne correspond pas à au moins l'un de la pluralité de profils connus, que le dispositif est à l'extérieur de l'étui (316) et d'initier un mode de puissance normale (318).
